# EUROPÄISCHE PATENTSCHRIFT

(11) **EP 0 591 741 B1**
(45) Veröffentlichungstag und Bekanntmachung des Hinweises auf die Patenterteilung: **11.12.1996**
(21) Anmeldenummer: 93115044.5
(22) Anmeldetag: 18.09.1993
(51) Int. Cl.: A22C 21/00

(54) **Verfahren zum maschinellen Gewinnen des Fleisches von Geflügelkörpern und Einrichtung zur Druchführung des Verfahrens**
Methode and device for mechanically obtaining meat from slaughtered poultry
Procédé et dispositif pour receuillir mécaniquement la viande de volailles abattues

(30) Priorität: 09.10.1992 DE 4234040
(43) Veröffentlichungstag der Anmeldung: 13.04.1994
(73) Patentinhaber: NORDISCHER MASCHINENBAU RUD. BAADER GMBH + CO KG, D-23565 Lübeck (DE)
(72) Erfinder: Kunig, Helmut, D-23611 Bad Schwartau (DE); Landt, Andreas, D-23554 Lübeck (DE); Richartz, Sigurd, D-23556 Lübeck (DE); Schröder, Matthias, D-23611 Bad Schwartau (DE)

(56) Entgegenhaltungen:
- EP-A- 0 168 865
- EP-A- 0 183 986
- EP-A- 0 207 553
- EP-A- 0 313 824
- EP-A- 0 380 714
- EP-A- 0 447 773

## Beschreibung

Die Erfindung betrifft ein Verfahren zum maschinellen Gewinnen des Filetfleisches von den Körpern geschlachteten Geflügels, von denen die Extremitäten entfernt sind und deren Skelett-Teilkörper im wesentlichen das aus Kamm (crista sterni) und Brustbeinplatte (corpus sterni) bestehende Brustbein (sternum) und die von den Rabenbeinen (coracoidae) getragenen Flügelgelenke mit dem Gabelbein (clavicula), sowie eventuell Reste der Rippen umfaßt, wobei die Geflügelkörper geahlten und in Richtung ihrer Längsachse mit vorausweisenden Flügelgelenken vorbewegt werden, sowie eine Einrichtung zur Durchführung des Verfahrens mit einem Förderer mit Aufnahmen, die mit einer Sattelfläche zur Stützung der Geflügelkörper auf der Innenfläche des Brustbeins und mit einem steuerbaren Klammerorgan zum Fixieren der Geflügelkörper ausgestattet sind, sowie mit einem längs der Bahn des Förderers angeordneten Satz von Bearbeitungswerkzeugen und mit einem Steuermechanismus zur zeit- und wegabhängigen Steuerung des Bearbeitungsvorganges.

Aus der EP 0380 714 B1 ist ein gattungsgemäßes Verfahren und eine zur Durchführung desselben geeignete Vorrichtung bekannt. Kennzeichnend für dieses Verfahren sind eine Reihe von Verfahrensschritten, die in der angegebenen Folge angewendet das Gewinnen des Fleisches von Geflügelkörpern in Form eines Doppelfilets, wahlweise mit oder ohne Innenfilets ermöglichen sollen. Dazu sind entsprechend angepaßte Bearbeitungswerkzeuge vorgesehen, die längs der Bahn eines Förderers mit Aufnahmen für die Halterung der zu bearbeitenden Geflügelkörper angeordnet und synchron mit der Vorbewegung der Aufnahmen steuerbar sind.

Wie die Praxis erweist, ist bei Anwendung der angegebenen Verfahrensschrittfolge hinsichtlich Ausbeute und Erscheinungsbild und insbesondere, was das Gewinnen von Filets mit sicher eingebundenen Innenfilets betrifft, ein befriedigendes Ergebnis nicht erreichbar. Eine Analyse der Ursachen zeigt, daß zu diesem Ergebnis im wesentlichen undefinierte Reißvorgänge führen, die sowohl gewachsene Fleischstrukturen, als auch die natürlichen Bindungen zwischen Innenfilets und Hauptfilet zerstören.

Es ist die Aufgabe der Erfindung, eine Vorgehensweise bei der Gewinnung des Fleisches von Geflügelkörpern anzugeben, vermittels der ein optisch ansprechendes Produkt bei hoher Ausbeute erzielbar ist, bei dem die Innenfilets mit dem Hauptfilet fest verhaftet sind.

Diese Aufgabe wird erfindungsgemäß durch das Verfahren nach Anspruch 1 gelöst. Zur Durchführung dieses Verfahrens sind Bearbeitungswerkzeuge vorgesehen, deren Merkmale aus den übrigen Ansprüchen entnehmbar sind.

Die damit erzielbaren Vorteile bestehen insbesondere darin, daß durch das gezielt differenzierte Lösen des Fleisches vom Skelett in bezug auf die inneren und äußeren Filetteile und deren Lage am Skelett eine schonende Behandlung, d. h. Trennung vom Skelett unter Berücksichtigung der äußerst sensiblen Verbindung zwischen inneren und äußeren Filetteilen möglich ist. Damit werden diese Verbindungsstellen nicht unnötig strapaziert, und die Filets bleiben im Gegensatz zu dem Vorgehen nach der EP 0380 714 mit undefinierten Reißvorgängen als ganzes erhalten, umfassen also mit Sicherheit neben dem Hauptfilet auch die inneren Filetteile.

Ein Ausführungsbeispiel der erfindungsgemäßen Einrichtung wird nachstehend anhand der anliegenden Zeichnungen näher erläutert. Es zeigen
- Fig. 1: eine vereinfachte Gesamtansicht der erfindungsgemäßen Einrichtung in axonometrischer Darstellung von unten betrachtet,
- Fig. 2: axonometrische Darstellungen eines für die erfindungsgemäße Bearbeitung präparierten Geflügelkörpers in den einzelnen Bearbeitungsstadien jeweils nach Durchführung der Verfahrensschritte a) bis h) .
- Fig. 3: eine axonometrische Darstellung des Skelettkörpers eines als Brustkappe bezeichneten Teils eines Geflügelkörpers in aufgesatteltem Zustand,
- Fig. 4: eine vereinfachte Ansicht eines Enthäutewerkzeuges in axonometrischer Darstellung von unten betrachtet.

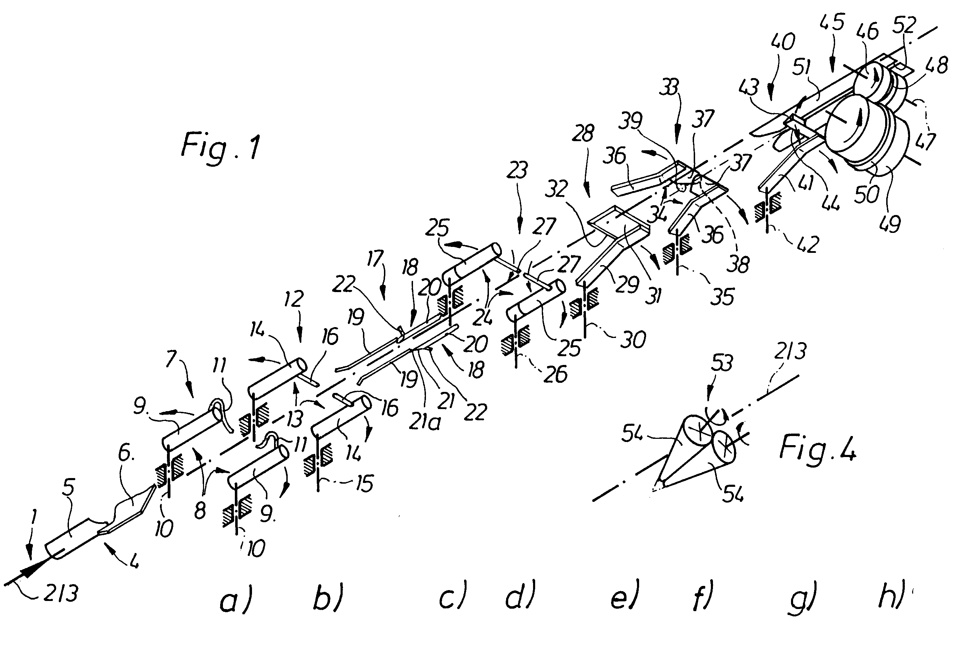

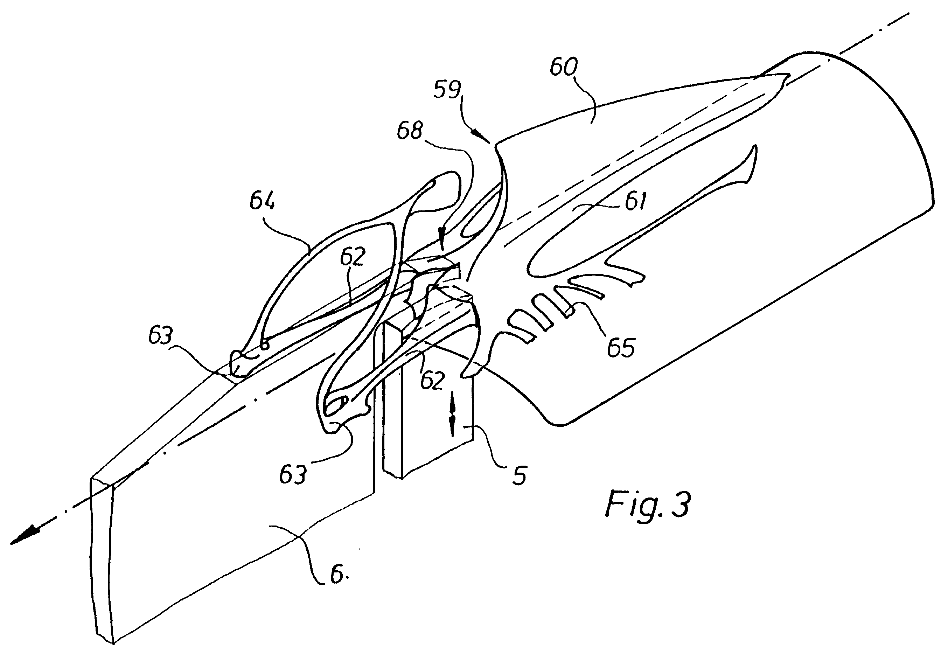

Die erfindungsgemäße Einrichtung ist auf einem Maschinengestell aufgebaut, das aus Gründen der Übersichtlichkeit nicht dargestellt ist, und umfaßt eine Anzahl Bearbeitungswerkzeuge, die gemäß Fig. 1 längs des Untertrums 2 eines Förderers 1 angeordnet sind. Dieser besteht aus einer endlosen und in einer senkrechten Ebene auf geeignete Weise umlaufend angetriebenen Kette 3 , von der lediglich der Untertrum 2 angedeutet dargestellt ist, und der mit Aufnahmen 4 für die Halterung der zu bearbeiteten Geflügelkörper 58 bestückt ist. Die Aufnahmen 4 bestehen jeweils aus einem Sattelteil 5 , das mit einem Klemmteil 6 eine über nicht gezeigte gestellfeste Kurvenschienen steuerbare Zange bildet, die vor Eintritt der Aufnahmen 4 in den Bereich der Bearbeitungswerkzeuge durch Anheben des Sattelteils 5 in Schließstellung gebracht wird und den Geflügelkörper 58 , wie in Fig. 3 dargestellt, ausgerichtet und positioniert festhält.

Das erste Bearbeitungswerkzeug 7 (Fig. 1a) besteht aus einem Paar symmetrisch zu der Bahn der Aufnahmen 4 angeordneter Teilwerkzeuge 8 , je umfassend einen Haltearm 9 , der jeweils um eine senkrechte Achse 10 schwenkbar gelagert ist und an seinem freien Ende einen Schabefinger 11 trägt. Der aktive Teil desselben ist in Anpassung an die Wölbung des zu bearbeitenden Bereiches gekrümmt ausgebildet und durch eine nicht gezeigte Steuereinrichtung zwischen einer Stellung außerhalb der Bahn der Geflügelkörper in eine diesselbe kreuzende durch Schwenken um die Achse 10 vermittels geeigneter Antriebsmittel steuerbar.

Die Steuerung erfolgt dabei durch das Produkt über einen nicht gezeigten Taster, so daß die Aktivierung der Teilwerkzeuge 8 jeweils in Abhängigkeit von der Größe des Produktes erfolgt.

Dem Bearbeitungswerkzeug 7 folgt eine zweites Bearbeitungswerkzeug 12 (Fig. 1b) , das ähnlich dem ersten 7 angeordnet und in gleicher Weise steuerbar ist. Es besteht aus einem Paar Teilwerkzeugen 13 mit je einem Haltearm 14 , der jeweils um eine Achse 15 schwenkbar gelagert ist. Jeder Haltearm 14 trägt an seinem freien Ende einen Schabefinger 16 , wobei beide sich in einer gemeinsamen Ebene erstrecken, die durch die Lage der Enden der Schabefinger 11 der Teilwerkzeuge 8 bestimmt ist.

Dem Bearbeitungswerkzeug 12 schließt sich ein drittes Bearbeitungswerkzeug 17 (Fig. 1c) an, in dessen Bereich ein Paar paralleler Führungsstangen 19 symmetrisch zu beiden Seiten der Bahn der Aufnahmen 4 und in einer Ebene angeordnet sind, die der vorbeschriebenen entspricht. Das Bearbeitungswerkzeug 17 umfaßt ein Paar gestellfester Teilwerkzeuge 18 , die als parallele Führungsstangen 20 ausgebildet sind, die die Führungsstangen 19 in einer zu der Bahn der Aufnahmen 4 in größerem Abstand darüberliegenden Ebene überlagern. Die Führungsstangen 20 sind an ihren, der Laufrichtung der Aufnahmen 4 entgegenstehenden Enden als Abweiser 21 in Form von durch einen Schrägschnitt erzeugte Stirnfläche ausgeführt, wobei die entstehende Spitze in Verlängerung der inneren Flanke jeder Führungsstange 20 gelegen ist. Jede der Führungsstangen 20 ist weiter mit einem Anschlag 22 versehen, der in der Nähe des Abweisers 21 angeordnet ist und seitlich nach außen aus der Führungsstange 20 herausragt.

Letztere leiten über in den Bereich eines vierten Bearbeitungswerkzeuges 23 (Fig. 1d) , das ähnlich dem ersten 7 und zweiten 12 angeordnet ist. Die Steuerung erfolgt über ein nicht dargestelltes Kurvengetriebe, das synchron mit dem Förderer 1 mitläuft. Das Bearbeitungswerkzeug 23 besteht aus einem Paar Teilwerkzeuge 24 mit je einem Haltearm 25 , der jeweils um eine Achse 26 schwenkbar gelagert ist. Jeder Kaltearm 25 trägt an seinem freien Ende einen Schabefinger 27 , wobei beide sich in einer gemeinsamen Ebene erstrecken, die durch die Lage der Enden der Schabefinger 11 der Teilwerkzeuge 8 und derjenigen 16 des Teilwerkzeuges 13 bestimmt ist. Die Schabefinger 27 sind von der Bahn der Aufnahmen 4 her und senkrecht zu dieser in geeigneter, nicht näher dargestellter Weise gegen Federkraft verdrängbar ausgebildet.

Die Reihe der Bearbeitungswerkzeuge setzt sich fort mit einem fünften Bearbeitungswerkzeug 28 (Fig. 1e) , welches aus einem einseitig neben der Bahn der Aufnahmen 4 um eine senkrechte Achse 30 schwenkbaren Kaltearm 29 besteht, an dessen freiem Ende eine Schabeklinge 31 befestigt ist. Diese weist eine Schabekante 32 auf, die durch Schwenken des Haltearms 29 zwischen einer Stellung außerhalb der Bahn der Geflügelkörper 58 in eine dieselbe kreuzende Stellung steuerbar ist. Dabei erstreckt sich die Schabekante 32 in einer Ebene, die etwa derjenigen entspricht, in der die Führungsstangen 20 des dritten Bearbeitungswerkzeuges 17 verlaufen.

Dem Bearbeitungswerkzeug 28 folgt ein sechstes Bearbeitungswerkzeug 33 (Fig. 1f) , welches aus einem Paar Teilwerkzeuge 34 besteht, deren jedes einen um eine senkrechte Achse 35 schwenkbaren Haltearm 36 aufweist, an dessen freiem Ende eine Messerklinge 37 befestigt ist. Die beiden Messerklingen 37 sind spiegelbildlich und in Aktivstellung miteinander scherend angeordnet. Sie sind im wesentlichen von dreieckförmiger Gestalt, wobei sie jeweils mit einer Dreieckspitze 38 einander zuweisen und in diesem Bereich in Aktivstellung überdecken. Die Dreieckspitze 38 und die von dieser ausgehenden Kanten sind als Schneidkanten 39 ausgebildet. Die Messerklingen 37 sind durch Schwenken der Haltearme 36 zwischen einer Stellung außerhalb der Bahn der Geflügelkörper 58 und der erwähnten Aktivstellung steuerbar, in der die Messerklingen 37 die beschriebene Scherstellung einnehmen. Die Teilwerkzeuge 34 sind in der Aktivstellung federbelastet und die Messerklingen 37 in einer Ebene angeordnet, die etwas über der Arbeitsebene des Bearbeitungswerkzeuges 28 liegt.

Dem Bearbeitungswerkzeug 33 schließt sich ein siebtes Bearbeitungswerkzeug 40 (Fig. 1g) an, welches aus einem einseitig neben der Bahn der Aufnahmen 4 um eine senkrechte Achse 42 schwenkbaren Haltearm 41 besteht, an dessen freiem Ende ein Stoppelement 43 befestigt ist. Dieses weist eine Stoppfläche 44 auf, die durch Schwenken des Haltearms 41 zwischen einer Stellung außerhalb der Bahn der Geflügelkörper 58 in eine dieselbe kreuzende Stellung steuerbar ist. Dabei befindet sich die Stoppfläche 44 in einer Ebene, die sich unmittelbar über der Bahn des Skelettkörpers 69 erstreckt. Das Stoppelement 43 ist federnd höhenausweichbar angeordnet.

Schließlich ist ein achtes Bearbeitungswerkzeug 45 (Fig. 1h) vorgesehen, welches eine Abstreifwalze 46 umfaßt, die um eine quer zu der Bahn der Aufnahmen 4 gelagerte Achse 47 umlaufend angetrieben ist. Dabei tangiert die Mantelfläche der Abstreifwalze 46 mit ihrem der Bahn der Aufnahmen 4 zugekehrten Teil etwa die Arbeitsebene der Messerklingen 37 des sechsten Bearbeitungswerkzeuges 33 und läuft gegen die Förderrichtung der Geflügelkörper 58 um. Die Abstreifwalze 46 hat eine in der Symmetrieebene des Förderers 1 gelegene Spurrille 48 , in die auf der der Bahn der Aufnahmen 4 abgekehrten Seite der Abstreifwalze 46 eine mit dieser gleichsinnig angetriebene Ableitwalze 49 mit einem an dieser befindlichen Radialsteg 50 eingreift. Dem Bereich des siebten 40 und achten Bearbeitungswerkzeuges 45 sind ein Paar gestellfester Führungen 51 zugeordnet, die zwischen sich einen Spalt 52 zum Führen des Kamms 60 des Brustbeins 59 belassen und annähernd eine Tangente an die Abstreifwalze 46 bilden.

Die Wirkungsweise der Einrichtung wird nachstehend anhand des Durchlaufs eines entsprechend der Beschreibung in dem Erfindungsbetreff vorbereiteten Geflügelkörpers 58 beschrieben.

Der zu bearbeitende Geflügelkörper 58 wird unmittelbar nach Durchgang einer Aufnahme 4 in dem nicht gezeigten Beschickbereich des Obertrums des Förderers 1 bereitgehalten. Dabei weisen das Brustbein 59 nach oben und die Flügelgelenke 63 voraus. Bei Ankunft einer Aufnahme 4 wird der bereitgehaltene Geflügelkörper 58 auf deren Sattelteil 5 aufgelegt, derart, daß die Innenseite der Brustbeinplatte 61 auf der Sattelfläche zur Auflage kommt. Der Geflügelkörper 58 wird dann gegen den Klemmteil 6 geschoben, so daß dessen rückweisender hornartiger Fortsatz zwischen den Ästen des Gabelbeins 64 auf den dem Kamm 60 des Brustbeins 59 vorgelagerten Teil der Brustbeinplatte 61 unter Übergreifen derselben aufläuft. Inzwischen hat sich die Aufnahme 4 der Umlenkung des Förderers 1 in den Untertrum 2 genähert, so daß der Sattelteil 5 der Aufnahme 4 durch Auflaufen auf eine nicht gezeigte gestellfeste Kurvenschiene angehoben und damit der Geflügelkörper 58 an der Klemmstelle 68 eingeklemmt wird. Der auf diese Weise sicher gehaltene und positionierte Geflügelkörper 58 gelangt nun in den Bereich des ersten Bearbeitungswerkzeuges 7 (Fig. 1a) .

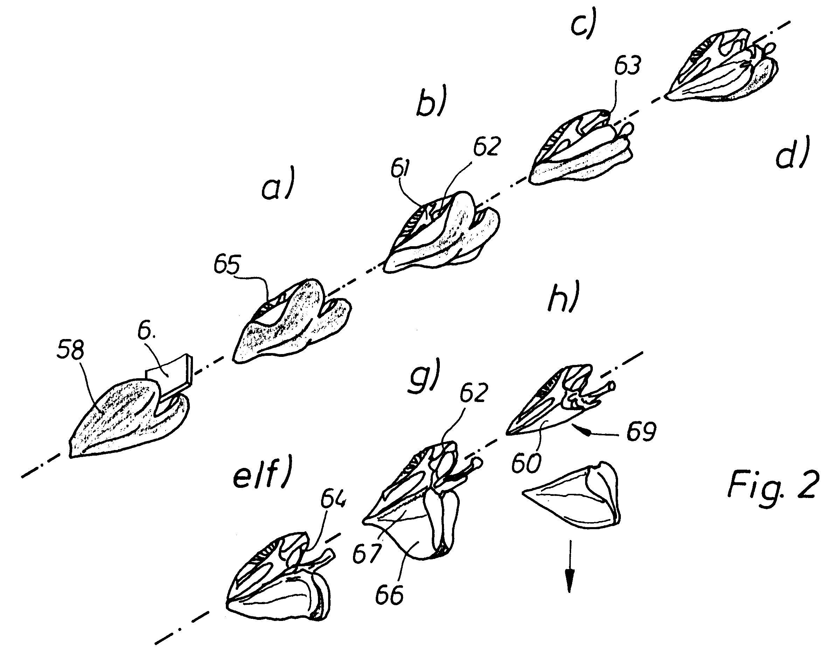

Dessen Teilwerkzeuge 8 werden unmittelbar nach Vorbeigang der Flügelgelenke 63 in die Bahn des Geflügelkörpers 58 bis zur Auflage der Schabefinger 11 auf den Rippenresten bzw. den äußeren Teilen der Brustbeinplatte 61 eingesteuert und heben das dort aufliegende Fleisch entsprechend Fig. 2 a) ab, so daß diese Fleischteile der Schwerkraft folgend frei herabhängen.

So bearbeitet gelangt der Geflügelkörper 58 in den Bereich des zweiten Bearbeitungswerkzeuges 12 , dessen Teilwerkzeuge 13 ebenfalls unmittelbar nach Vorbeigang der Flügelgelenke 63 aktiviert werden, so daß die Schabefinger 16 in die durch die Schabefinger 11 geschaffene Trennfläche eindringen und auf den Rabenbeinen 62 und anschließend der Brustbeinplatte 61 gleitend die dort aufliegenden Fleischteile bis in die Nähe des Kamms 60 des Brustbeins 59 abheben (Fig. 2b).

In diese Trennflächen dringt im weiteren Verlauf der Förderung ein Paar Führungsstangen 19 ein, die bewirken, daß das Gabelbein 64 in der Nähe seiner Ansatzstellen an den Rabenbeinen 62 geführt und auf dem Sattelteil 5 der Aufnahme 4 niedergehalten wird. In diesem Zustand erreicht der Geflügelkörper 58 das dritte Bearbeitungswerkzeug 17 , dessen Führungsstangen 20 mit ihren Spitzen 21a unmittelbar neben dem Gabelbein 64 und oberhalb der Flügelgelenke 63 in das Fleisch eindringen. Dabei bewirken die Abweiser 21 , daß die gelösten Fleischteile nach außen in den Bereich der Anschläge 22 gedrängt werden, die das Fleisch zurückhalten und dadurch aufgrund der fortschreitenden Förderung des Geflügelkörpers 58 zum Abreißen von dem Skelettkörper 69 im Bereich der Flügelgelenke 63 bringen (Fig. 2c) .

Anschließend werden die Schabefinger 23 des vierten Bearbeitungswerkzeuges 23 unmittelbar vor Ankunft des Brustbeines 59 in die Bahn des Geflügelkörpers eingeschwenkt, wobei sie die in den Verfahrensschritten a) und b) begonnene Ablösung der Fleischteile von der Brustbeinplatte 61 bis in den Kehlbereich zwischen dieser und dem Kamm 60 des Brustbeins 59 fortführen (Fig. 2d).

Als nächstes werden die auf dem Gabelbein 64 aufliegenden Fleischteile abgehoben, zu welchem Zweck die Schabeklinge 31 des fünften Bearbeitungswerkzeuges 28 des Geflügelkörpers 58 in dessen Bahn eingesteuert und kurz vor Ankunft des Brustbeins 59 aus dieser ausgesteuert wird. Das Abschaben des Fleisches erfolgt dabei unter Verdrängen des Gabelbeins 64 gegen die Rabenbeine 62 .

Anschließend werden die insbesondere die inneren Filetteile an das Brustbein 59 anbindenden Häute angeschnitten, die durch die herabhängenden, bisher gelösten Fleischteile vor dem Kamm 60 des Brustbeins 59 gestrafft gehalten werden. Das geschieht dadurch, daß die Messerklingen 37 des sechsten Bearbeitungswerkzeuges 33 vor Ankunft des Geflügelkörpers 58 in die Bahn desselben eingesteuert werden, so daß die genannten Häute in den Scherbereich der Messerklingen 37 einlaufen und zerschnitten werden. Bei Ankunft des Kamms 60 des Brustbeins 62 drängt sich dieses in den Scherbereich und zwingt die Messerklingen 37 auseinander, so daß sich ihre Schneidkanten 39 auf den Flanken des Kamms 60 des Brustbeins 62 abstützen und auf diesen unter Federbelastung gleiten. Die Aussteuerung der Messerklingen 37 erfolgt kurz nach Eintritt des Kamms 60 in den Scherbereich (Fig. 2 e/f ).

Um nun noch die besonders feste Verbindung des Fleisches im Stirn- und Kammbereich des Brustbein 59 zu lösen, wird das Stoppelement 43 des siebten Bearbeitungswerkzeuges 40 kurz vor Ankunft des Geflügelkörpers 58 in die Bahn derselben eingesteuert und in dieser Stellung bis kurz nach Vorbeigang des Stirnbereiches des Kamms 60 des Brustbeins 59 gehalten. Demzufolge wird das Fleisch kurzzeitig zurückgehalten, so daß die genannten Verbindungen abreißen (Fig. 2g).

Die noch verbliebene Verbindung zwischen Skelettkörper 69 und Fleisch wird schließlich durch eine Abstreifwalze 46 gelöst, die das das Hauptfilet 66 und Innenfilet 67 umfassende Gesamtfleisch unter geringer Strapazierung von dem Kamm 60 des Brustbeins 59 abreißen, wobei dieser Vorgang durch die Ableitwalze 49 unterstützt wird (Fig. 2h).

Danach wird die klemmende Halterung der Aufnahme 4 gelöst und der vom Fleisch befreite Skelettkörper 69 freigegeben.

Eingangs des gesamten Prozesses kann ein Enthäutevorgang vorgesehen sein, welcher Aufgabe ein Enthäutewerkzeug 53 entsprechend Fig. 4 dienen kann. Dabei werden die Mantelflächen eines Paares miteinander einen Klemmspalt bildender, gegenläufig rotierender Walzen 54 mit dem Geflügelkörper 58 in Kontakt gebracht, so daß die Haut dem Klemmspalt zugetrieben und dort erfaßt und abgezogen wird.

### Bezugszeichenliste

- 1: Förderer
- 2: Untertrum
- 3: Kette
- 4: Aufnahme
- 5: Sattelteil
- 6: Klemmteil
- 9: Haltearm
- 10: Achse
- 11: Schabefinger
- 12: zweites Bearbwkzg.
- 13: Teilwerkzeug
- 14: Haltearm
- 15: Achse
- 16: Schabefinger
- 17: drittes Bearbwkzg.
- 18: Teilwerkzeug
- 19: Führungsstange
- 20: Führungsstange
- 21: Abweiser
- 21a: Spitze
- 22: Anschlag
- 23: viertes Bearbwkzg.
- 24: Teilwerkzeug
- 25: Haltearm
- 26: Achse
- 27: Schabefinger
- 28: fünftes Bearbwkzg
- 29: Haltearm
- 30: Achse
- 31: Schabeklinge
- 32: Schabekante
- 33: sechstes Bearbwkzg.
- 34: Teilwerkzeug
- 35: Achse
- 36: Haltearm
- 37: Messerklinge
- 38: Dreieckspitze
- 39: Schneidkante
- 40: siebtes Bearbwkzg.
- 41: Haltearm
- 42: Achse
- 43: Stoppelement
- 44: Stoppfläche
- 45: achtes Bearbwkzg.
- 46: Abstreifwalze
- 47: Achse
- 48: Spurrille
- 49: Ableitwalze
- 50: Radialsteg
- 51: Führung
- 52: Spalt
- 53: Enthäutewerkzeug
- 54: Walzen
- 55: -
- 56: -
- 57: -
- 58: Geflügelkörper
- 59: Brustbein
- 60: Kamm (crista sterni)
- 61: Brustbeinplatte (corpus sterni)
- 62: Rabenbeine
- 63: Flügelgelenke
- 64: Gabelbein
- 65: Rippen
- 66: Hauptfilet
- 67: Innenfilet
- 68: Klemmstelle
- 69: Skelettkörper

## Patentansprüche

1. Verfahren zum maschinellen Gewinnen des Filetfleisches von den Körpern geschlachteten Geflügels, von denen die Extremitäten entfernt sind und deren Skelett-Teilkörper im wesentlichen das aus Kamm (60) (crista sterni) und Brustbein-platte (61) (corpus sterni) bestehende Brustbein (59) (sternum) und die von den Rabenbeinen (62) (coracoidae) getragenen Flügelgelenke (63) mit dem Gabelbein (64) (clavicula) , sowie eventuell Reste der Rippen (65) umfaßt, wobei die Geflügelkörper (58) gehalten und in Richtung ihrer Längsachse mit vorausweisenden Flügelgelenken (63) vorbewegt werden, **gekennzeichnet durch** nachstehende in der angeführten Folge ausgeführte Verfahrensschritte, die jeweils spiegelbildlich zu beiden Seiten der Symmetrieebene des Geflügelkörpers (58) ausgeführt werden:
a. Abheben der Fleischteile, die auf der Brustbeinplatte (61) im Bereich des Ansatzes der Rippen (65) an diese und auf den eventuell vorhandenen Rippenresten aufliegen,
b. Ablösen der auf den Rabenbeinen (62) im Bereich zwischen den Flügelgelenken (63) und den Ansatzstellen der Rabenbeine (62) an der Brustbeinplatte (61) aufliegenden Fleischteile unter Lösen der durch die inneren Filetteile verlaufenden Flügelsehne, sowie Lösen der auf der Brustbeinplatte (61) aufliegenden Fleischteile unter Fortführen des Trennvorganges nach Verfahrensschritt a) bis in die Nähe des Kamms (60) des Brustbeins (59),
c. Trennen der Verbindung des Fleisches mit dem Skelettkörper (69) im Bereich der Ansatzstellen des Gabelbeins (64) an den Rabenbeinen (62) ,
d. Abheben der auf der Brustbeinplatte (61) in dem Kehlbereich zwischen dieser und dem Kamm (60) des Brustbeins (59) aufliegenden Fleischteile unter Fortführen des im Bereich des Brustbeins (59) verlaufenden Teils des Trennvorgangs nach Verfahrensschritt b),
e. Lösen der auf dem Gabelbein (64) aufliegenden Fleischteile,
f. Einschneiden der insbesondere die inneren Filetteile an das Brustbein (59) anbindenden Häute,
g. Trennen der Verbindungen zwischen Filetfleisch und Brustbein (59) im Stirn- und benachbarten Kammbereich desselben,
h. endgültiges Ablösen des Filetfleisches von dem Kamm (60) des Brustbeins (59)

2. Verfahren nach Anspruch 1 , **dadurch gekennzeichnet,** daß vor Durchführung der Verfahrensschritte a) bis h) die Haut entfernt wird.

3. Einrichtung zur Durchführung des Verfahrens nach Anspruch 1 mit einem Förderer (1) mit Aufnahmen (4), die mit einer Sattelfläche zur Stützung der Geflügelkörper (58) auf der Innenfläche des Brustbeins (59) und mit einem steuerbaren Klammerorgan (5, 6) zum Fixieren der Geflügelkörper (58) ausgestattet sind, sowie mit einem längs der Bahn des Förderers angeordneten Satz von Bearbeitungswerkzeugen und mit einem Steuermechanismus zur zeit- und wegabhängigen Steuerung des Bearbeitungsvorganges, **dadurch gekennzeichnet,** daß der Satz von Bearbeitungswerkzeugen folgendende in Fortschrittrichtung des Förderers (1) hintereinander angeordnete Bearbeitungswerkzeuge umfaßt:
ein erstes Bearbeitungswerkzeug (7) zum Abheben der Fleischteile, die auf der Brustbeinplatte (61) im Bereich des Ansatzes der Rippen (65) an diese und auf den eventuell vorhandenen Rippenresten aufliegen;
ein zweites Bearbeitungswerkzeug (12) zum Ablösen der auf den Rabenbeinen (62) im Bereich zwischen den Flügelgelenken (63) und den Ansatzstellen der Rabenbeine (62) an der Brustbeinplatte (61) aufliegenden Fleischteile unter Lösen der durch die inneren Filetteile verlaufenden Flügelsehne, sowie Lösen der auf der Brustbeinplatte (61) aufliegenden Fleischteile unter Fortführen des Trennvorganges nach Verfahrensschritt a) bis in die Nähe des Kamms (60) des Brustbeins (59);
ein drittes Bearbeitungswerkzeug (17) zum Trennen der Verbindung des Fleisches mit dem Skelettkörper (69) im Bereich der Ansatzstellen des Gabelbeins (64) an den Rabenbeinen (62) ;
ein viertes Bearbeitungswerkzeug (23) zum Abheben der auf der Brustbeinplatte (61) in dem Kehlbereich zwischen dieser und dem Kamm (60) des Brustbeins (59) aufliegenden Fleischteile unter Fortführen des im Bereich des Brustbeins (59) verlaufenden Teils des Trennvorgangs nach Verfahrensschritt b) ;
ein fünftes Bearbeitungswerkzeug (28) zum Lösen der auf dem Gabelbein (64) aufliegenden Fleischteile ;
ein sechstes Bearbeitungswerkzeug (33) zum Einschneiden der insbesondere die inneren Filetteile an das Brustbein (59) anbindenden Häute ;
ein siebtes Bearbeitungswerkzeug (40) zum Trennen der Verbindungen zwischen Filetfleisch und Brustbein (59) im Stirn- und benachbarten Kammbereich desselben ;
ein achtes Bearbeitungswerkzeug (45) zum endgültigen Ablösen des Filetfleisches von dem Kamm (60) des Brustbeins (59).

4. Einrichtung nach Anspruch 3 , **dadurch gekennzeichnet,** daß das erste Bearbeitungswerkzeug (7) ein Paar spiegelbildlich ausgeführter Teilwerkzeuge (8) je mit einem Schabefinger (11) umfaßt, der entsprechend der äußeren Querschnittskontur des in diesem Verfahrensschritt zu bearbeitenden Abschnitts des Skelettkörpers (69) gekrümmt ausgebildet ist und wahrend des Vorbeigangs dieses Abschnitts in die Bahn des Geflügelkörpers (58) eingesteuert gehalten wird.

5. Einrichtung nach Anspruch 3 oder 5 , **dadurch gekennzeichnet,** daß das zweite Bearbeitungswerkzeug (12) ein Paar spiegelbildlich ausgeführter Teilwerkzeuge (13) je mit einem Schabefinger (16) umfaßt, deren wirksame Teile sich im wesentlichen in einer Ebene erstrecken, die die Oberfläche der Rabenbeine (62) tangiert und in der die Schabefinger (16) unmittelbar nach Vorbeigang der Flügelgelenke (63) in die Bahn des Geflügelkörpers (58) eingesteuert haltbar sind.

6. Einrichtung nach einem der Ansprüche 3 bis 5, **dadurch gekennzeichnet,** daß das dritte Bearbeitungswerkzeug (17) ein Paar spiegelbildlich ausgeführter Teilwerkzeuge (18) in Form von je mit einer gegen die Förderrichtung gerichteten Spitze (21a) versehenen Abweisern(21) umfaßt, die unmittelbar neben der Bahn des Gabelbeins (64) angeordnet und je mit einem seitlich nach außen aufragenden Anschlag (22) zum Rückhalten der durch die Abweiser (21) nach außen gedrängten Fleischteile versehen sind.

7. Einrichtung nach Anspruch 7 , **dadurch gekennzeichnet,** daß jeder Abweiser (21) als durch einen Schrägschnitt erzeugte Stirnfläche einer Führungsstange (20) ausgebildet ist, die sich im wesentlichen parallel zu der Bahn des Förderers (1) ersteckt, wobei die Spitze (21a) in Verlängerung der inneren Flanke jeder Führungsstange (20) ausgebildet ist.

8. Einrichtung nach Anspruch 6 oder 7 , **dadurch gekennzeichnet,** daß ein Paar symmetrisch zu beiden Seiten der Bahn des Förderes (1) angeordneter bis in den Bereich der Abweiser (21) und Anschläge (22) reichender Führungsstangen (19) vorgesehen sind, die das Gabelbein (64) zwischen sich führen und die Rabenbeine an ihrem die Flügelgelenke tragenden Enden abstützen.

9. Einrichtung nach einem der Ansprüche 3 bis 8 , **dadurch gekennzeichnet,** daß das vierte Bearbeitungswerkzeug (23) ein Paar spiegelbildlich ausgeführter Teilwerkzeuge (24) je mit einem Schabefinger (27) umfaßt, deren wirksame Teile sich im wesentlichen in einer Ebene erstrecken, die die Oberfläche der Brustbeinplatte (61) tangiert und in der die Schabefinger (27) unmittelbar vor Ankunft des Brustbeins (59) in die Bahn der Geflügelkörper (58) einsteuerbar und während des Vorbeiganges des Brustbeins (59)eingesteuert haltbar sind, wobei die Schabefinger (27) zwischen ihren Stirnenden einen Durchlaß für den Kamm (60) des Brustbeins (59) belassen und senkrecht zu der Bahn der Geflügelkörper (58) federnd ausweichbar angeordnet sind.

10. Einrichtung nach einem der Ansprüche 3 bis 9, **dadurch gekennzeichnet,** daß das Bearbeitungswerkzeug (28) mindestens eine vor Ankunft des Geflügelkörpers (58) in eine die Bahn desselben kreuzende Stellung einsteuerbare und unmittelbar vor Ankunft des Brustbeins (59) aussteuerbare Schabeklinge (31) aufweist, die mit einer Schabekante (32) versehen ist, die sich quer zu der Bahn der Aufnahmen (4) und in einer Höhe über deren Stützfläche erstreckt, die der Bahn der Ansatzbereiche des Gabelbeins (64) an den Rabenbeinen (62) im wesentlichen entspricht.

11. Einrichtung nach einem der Ansprüche 3 bis 10, **dadurch gekennzeichnet,** daß das sechste Bearbeitungswerkzeug (33) ein Paar spiegebildlicher, miteinander scherend angeordneter Messerklingen (37) umfaßt, die vor Ankunft des Geflügelkörpers (58) in die scherende Stellung steuerbar und bis kurz nach Eintritt in deren Wirkbereich des Kamms (60) des Brustbeins (59) in deren Wirkbereich in dieser Stellung haltbar ausgebildet sind.

12. Einrichtung nach Anspruch 11 , **dadurch gekennzeichnet,** daß die Schneidkanten (39) der Messerklingen (37) gegenseitig eine Schere ausbildend gestaltet sind, wobei die Schneidkanten (39) einen voreilenden Teil aufweisen, von dem aus sich die Schneidkanten (39) gegen die in Laufrichtung des Förderers (1) divergierend erstrecken. konvergierend erstrecken.

13. Einrichtung zur Durchführung des Verfahrens nach einem der Ansprüche 3 bis 12, **dadurch gekennzeichnet,** daß das siebte Bearbeitungswerkzeug (40) mindestens ein Stoppelement (43) umfaßt, welches in einer Ebene unmittelbar über der Bahn des Skelettkörpers (69) in einer die Bahn der Geflügelkörper (58) kreuzenden Stellung gehalten und kurz nach Ankunft des Kamms (69) des Brustbeins (59) aus dieser Stellung aussteuerbar ist.

14. Einrichtung nach Anspruch 13, **dadurch gekennzeichnet,** daß das Stoppelement (43) höhenausweichbar angeordnet ist.

15. Einrichtung nach einem der Ansprüche 3 bis 14, **dadurch gekennzeichnet,** daß das achte Bearbeitungswerkzeug (45) eine Abstreifwalze (46) umfaßt, die um eine quer zu der Bahn der Aufnahmen (4) angeordnete Achse (47) umlaufend angetrieben ist und eine Spurrille (48) zur Führung des Kamms (60) des Brustbeins (59) aufweist, wobei der Umlauf der Abstreifwalze (46) gegen die Bewegungsrichtung des Förderers (1) erfolgt und ihre Anordnung so getroffen ist, daß der Kamm (60) des Brustbeins (59) in der Spurrille (48) geführt wird.

16. Einrichtung nach Anspruch 15 , **dadurch gekennzeichnet,** daß die Flanken der Spurrille (48) der Abstreifwalze (46) griffig ausgestaltet sind.

17. Einrichtung nach Anspruch 15 oder 16, **dadurch gekennzeichnet,** daß der Abstreifwalze (46) eine in gleichem Drehsinn angetriebene Ableitwalze (49) mit einem in der Spurrille (48) der Abstreifwalze (46) geführten Radialsteg (50) zugeordnet ist.

18. Einrichtung nach einem der Ansprüche 9 , 10, 11 und 13 , **dadurch gekennzeichnet,** daß die Teilwerkzeuge (24, 31, 37, 43) der entsprechenden Bearbeitungswerkzeuge schwenkbar angeordnet sind und ihre Steuerung über ein mit dem Antrieb des Förderers (1) synchron mitlaufendes Kurvengetriebe erfolgt.

19. Einrichtung zur Durchführung der Verfahren nach Ansprüchen 1 und 2 , **dadurch gekennzeichnet,** daß das Bearbeitungswerkzeug zum Enthäuten mindestens ein Paar gegenläufig rotierender, mit griffiger Mantelfläche versehener Walzen (54) umfaßt, die miteinander einen mittig über der Bahn des Förderers (1) und sich längs zu dieser erstreckenden Klemmspalt bilden, und daß die Walzen (54) in Kontakt mit der Haut des Geflügelkörpers (58) steuerbar ausgebildet sind.

20. Einrichtung nach einem der Ansprüche 3 bis 19, **dadurch gekennzeichnet,** daß die Bearbeitungswerkzeuge längs des Untertrums (2) des Förderers (1) angeordnet sind.

## Claims

1. Method for the mechanical obtaining of filet meat from the carcasses of slaughtered poultry, from which the extremities are removed and the skeletal part-carcass of which substantially comprises the breastbone (59) (sternum), which consists of the crest (60) (crista sterni) and breastbone plate (61) (corpus stern;) and the wing joints (63), which are carried by the raven bones (62) (coracoidae), with the wishbone (64) (clavicula) as well as possibly remainder of the ribs (65), wherein the poultry caracsses (58) are held and advanced in the direction of their longitudinal axis with wing joints (63) facing forwards, characterised by the following method steps which are carried in the stated sequence and which are carried out in mirror image at both sides of the plane of symmetry of the poultry carcass (58):
a. lifting-up of the meat portions which lie on the brestbone plate (61) in the region of the attachment of the ribs (65) to this and on the possibly present rib remainders,
b. detaching of the meat portions, which lie on the raven bones (62) in the region between the wing joints (63) and the attachment locations of the raven bones (62) to the breastbone plate (61), while releasing the wing tendons running through the inner filet parts as well as releasing the meat portions lying on the breastbone plate (61) while continuing the separating process after method step a) until in the proximity of the crest (60) of the breastbone (59),
c. separating the connection of the meat with the skeletal body (69) in the region of the attachment locations of the wishbone (64) to the raven bones (62),
d. lifting off of the meat portions, which lie on the breastbone plate (61) in the gullet region between this and the crest (60) of the breastbone (59), while continuing the part, which runs in the region of the breastbone (59), of the separating process after method step b).
e. releasing of the meat portions lying on the wishbone (64),
f. cutting into the skin particularly joining the inner filet parts to the breastbone (59),
g. separating the connections between filet meat and breastbone (59) in the frontal region, and adjacent crest regions, of the same,
h. finally detaching the filet meat from the crest (60) of the breastbone (59).

2. Method according to claim 1, characterised thereby that the skin Is removed before performance of the method steps a) to h).

3. Equipment for carrying out the method according to claim 1, with a conveyor (1) with receptacles (4), which are equipped with a saddle surface for the support of the poultry carcasses (58) on the inner surface of the breastbone (59) and with a controllable clamping element (5, 6) for fixing the poultry carcasses, as well as with a set of processing tools arranged along the path of the conveyor and with a control mechanism for control of the processing procedure In dependence on time and travel, characterised thereby that the set of processing tools comprises the following processing tools arranged one after the other in direction of advance of the conveyor (1):
a first processing tool (7) for lifting off the meat portions which lie on the breastbone plate (61) in the region of the attachment of the ribs (65) to this and or the possibly present rib remainders;
a second processing tool (21) for detaching the meat portions, which lie on the raven bones (62) in the region between the wing joints (63) and the attachment locations of the raven bones (62) to the breastbone plate (61), while releasing the wing tendons running through the inner filet parts as well as releasing the meat portions lying on the breastbone plate (61) while continuing the separating process after method step a) until in the proximity of the crest (60) of the breastbone (59);
a third processing tool (17) for separating the connection of the meat with the skeletal body (69) in the region of the attachment locations of the wishbone (64) to the raven bones (62);
a fourth processing tool (33) for lifting off of the meat portions, which lie on the breastbone plate (61) in the gullet region between this and the crest (60) of the breastbone (59), while continuing the part, which runs in the region of the breastbone (59), of the separating process after method step b);
a fifth processing tool for releasing of the meat portions lying on the wishbone (64);
a sixth processing tool (33) for cutting into the skin particularly joining the inner filet parts to the breastbone (59);
a seventh processing tool (40) for separating the connections between filet meat and breastbone (59) in the frontal region, and adjacent crest region, of the same;
an eighth processing tool (45) for finally detaching the filet meat from the crest (60) of the breastbone (59).

4. Equipment according to claim 3, characterised thereby that the first processing tool (7) comprises a pair of partial tools (8) executed in mirror image and each with a scraper finger (11), which is formed to be curved in correspondence with the outer cross-sectional contour of the section of the skeletal body (69) to be processed in this method step and which during the passage past of this section is held driven into the path of the poultry carcass (58).

5. Equipment according to claim 3 or 5, characterised thereby that the second processing tool (12) comprises a pair of partial tools (13) executed in mirror image and each with a scraper finger (16), the effective parts of which extend in substantially the plane, which Is tangential to the surface of the raven bones (62) and in which the scraper fingers (16) can be held driven into the path of the poultry carcass (58) directly after the passage past of the wing joints (63).

6. Equipment according to one of claims 3 to 5, characterised thereby that the third processing tool (17) comprises a pair of partial tools (18) executed in mirror image and in the form of deflectors (21) which are each provided with a tip (21a) directed against the conveying direction and are arranged directly adajcent to the path of the wishbone (64) and which are each provided with a laterally outwardly projecting abutment (22) for restraining the meat portions urged outwardly by the deflectors (21).

7. Equipment according to claim 7, characterised thereby that each deflector (21) is formed as an end surface, which is produced by an oblique cut, of a guide rod (20), which extends substantially parallel to the path of the conveyor (1), wherein the tip (21a) is formed in prolongation of the inner flank of each guide rod (20).

8. Equipment according to claim 6 or 7, characterised thereby that a pair of guide rods (19), which are arranged symmetrically with respect to both sides of the path of the conveyor (1), reach into the region of the deflectors (21) and abutments (22), guide the wishbone (64) therebetween and support the raven bones at their ends carrying the wing joints, are provided.

9. Equipment according to one of claims 3 to 8, characterised thereby that the fourth processing tool (23) comprises a pair of partial tools (24) executed in mirror image and each with a scraper finger (27), the effective parts of which extend substantially in one plane, which is tangential to the surface of the breastbone plate (61), and in which the scraper fingers (27) are drivable into the path of the poultry carcass (58) directly before arrival of the breastbone (59) and can be held driven in during the passage past of the breastbone (59), wherein the scraper fingers (27) leave a passage for the crest (60) of the breastbone (59) between their front ends and are arranged to be resiliently deflectable perpendicularly to the path of the poultry carcass (58).

10. Equipment according to one of claims 3 to 9, characterised thereby that the processing tool (28) has at least one scraper blade (31), which is drivable into a position crossing the path directly before arrival of the poultry carcass (58) and drivable out directly before arrival of the breastbone (59) and is provided with a scraper edge (32), which extends transversely to the path of the receptacles (4) and at a height above the support surface thereof, which substantially corresponds to the path of the attachment regions of the wishbone (64) to the raven bones (62).

11. Equipment according to one of claims 3 to 10, characterised thereby that the sixth processing tool (32) comprises a pair of mirror-image knife blades which are arranged to be shearing with one another and which are controllable into the shearing setting before arrival of the poultry carcass (58) and are constructed to be able to be held in this setting, shortly after entry into the effective range of the crest (60) of the breastbone (59), in the effective range thereof.

12. Equipment according to claim 11, characterised thereby that the cutting edges (39) of the knife blades (37) are designed to mutually form a shears, wherein the cutting edges (39) have a leading part from which the cutting edges (39) divergingly extend/convergingly extend compared with the running direction of the conveyor.

13. Equipment for carrying out the method according to one of claims 3 to 12, characterised thereby that the seventh processing tool (40) comprises at least one stop element (43), which is held in a plane directly above the path of the skeletal body (69) in a setting crossing the path of the poultry carcasses (58) and is drivable out of this setting shortly after arrival of the crest (69) of the breastbone (59).

14. Equipment according to claim 13, characterised thereby that the stop element (43) is arranged to be deflectable in height.

15. Equipment according to one of claims 3 to 14, characterised thereby that the eighth processing tool (45) comprises a stripper roller (46), which is driven to rotate about an axis (47) arranged transversely to the path of the receptacles (4) and has a flange groove (48) for guidance of the crest (60) of the breastbone (59), wherein the rotation of the stripper roller (46) takes place against the movement direction of the conveyor (1) and its arrangement is such that the crest (60) of the breastbone (59) is guided in the flange groove (48).

16. Equipment according to claim 15, characterised thereby that the flanks of the flange groove (48) of the stripper roller (46) are shaped to be gripping.

17. Equipment according to claim 15 or 16, characterised thereby that the stripper roller (46) is associated with a discharge roller (49), which is driven in the same rotational sense, with a radial web (50) guided in the flange groove (48) of the stripper roller (46).

18. Equipment according to one of claims 9, 10, 11 and 13, characterised thereby that the partial tools (24, 31, 37, 43) of the corresponding processing tools are pivotably arranged and their control Is effected by way of a cam gear running synchronously with the drive of the conveyor (1).

19. Equipment for carrying out the method according to claims 1 and 2, characterised thereby that the processing tool for skinning comprises at least one pair of oppositely rotating rollers (54) which are provided with gripper circumferential surfaces and which together form a clamping gap extending centrally over the path of the conveyor (1) and longitudinally thereof and that the rollers (54) are constructed to be controllably in contact with the skin of the carcass (58).

20. Equipment according to one of claims 3 to 19, characterised thereby that the processing tools are arranged longitudinally of the lower run (2) of the conveyor (1).

## Revendications

1. Procédé pour recueillir mécaniquement la chair en filet des corps de volailles abattues, desquels les extrémités sont retirées et dont le corps de squelette partiel comprend, pour l'essentiel, le sternum (59) constitué du bréchet (60) (crista sterni) et de la plaque sternale (61) (corpus sterni), et les articulations (63) des ailes avec la fourchette (64) (clavicula), portées par les os coracoïdes (62) (coracoidae), ainsi qu'éventuellement des restes des côtes (65), les corps de volaille (58) étant retenus et animés d'un mouvement d'avance dans la direction de leur axe longitudinal avec les articulations (63) des ailes tournées vers l'avant, caractérisé par les étapes opératoires ci-après exécutées selon la séquence présentée, qui sont exécutées respectivement de façon symétrique de part et d'autre du plan de symétrie du corps de volaille (58):
a. décollement des parties de chair, qui reposent sur la plaque sternale (61), dans la région du raccordement des côtes (65) à celle-ci, et sur les restes de côte éventuellement présents,
b. détachement des parties de chair reposant sur les os coracoïdes (62), dans la région située entre les articulations (63) des ailes et les points de raccordement des os coracoïdes (62) à la plaque sternale (61), en rompant le tendon des ailes s'étendant à travers les parties de filet intérieures, et détachement des parties de chair reposant sur la plaque sternale (61) en poursuivant l'opération de séparation selon l'étape opératoire a) jusqu'au voisinage du bréchet (60) du sternum (59),
c. séparation de la liaison de la chair avec le corps de squelette (69) dans la région des points de raccordement de la fourchette (64) aux os coracoïdes (62),
d. décollement des parties de chair reposant sur la plaque sternale (61) dans la région du gosier, entre cette dernière et le bréchet (60) du sternum (59), en poursuivant la partie, qui se déroule dans la région du sternum (59), de l'opération de séparation selon l'étape opératoire b),
e. détachement des parties de chair reposant sur la fourchette (64),
f. sectionnement des peaux liant en particulier les parties de filet intérieures au sternum (59),
g. séparation des liaisons entre la chair du filet et le sternum (59), dans la région frontale de ce dernier et la région voisine du bréchet,
h. détachement final de la chair du filet, du bréchet (60) du sternum (59).

2. Procédé selon la revendication 1, caractérisé en ce que, avant la mise en oeuvre des étapes opératoires a) à h), la peau est enlevée.

3. Dispositif pour la mise en oeuvre du procédé selon la revendication 1, comportant un transporteur (1) muni de réceptacles (4), qui sont pourvus d'une surface en forme de selle destinée à soutenir les corps de volaille (58) sur la surface intérieure du sternum (59) et d'un organe de serrage manoeuvrable (5, 6) destiné à immobiliser les corps de volaille (58), ainsi qu'une série d'outils de traitement, disposée le long du trajet du transporteur, et un mécanisme de commande destiné à commander, en fonction du temps et de la distance parcourue, l'opération de traitement, caractérisé en ce que la série d'outils de traitement comprend les outils de traitement suivants, disposés l'un à la suite de l'autre dans le sens de progression du transporteur (1):
un premier outil de traitement (7) destiné à décoller les parties de chair qui reposent sur la plaque sternale (61), dans la région du raccordement des côtes (65) à cette dernière, et sur les restes de côte éventuellement présents;
un deuxième outil de traitement (12) destiné à détacher les parties de chair reposant sur les os coracoïdes (62), dans la région située entre les articulations (63) des ailes et les points de raccordement des os coracoïdes (62) à la plaque sternale (61), en rompant le tendon des ailes qui s'étend à travers les parties de filet intérieures, et destiné également à détacher les parties de chair reposant sur la plaque sternale (61) en poursuivant l'opération de séparation selon l'étape opératoire a) jusqu'au voisinage du bréchet (60) du sternum (59);
un troisième outil de traitement (17) destiné à séparer la liaison de la chair avec le corps du squelette (69), dans la région des points de raccordement de la fourchette (64) aux os coracoïdes (62);
un quatrième outil de traitement (23) destiné à décoller les parties de chair reposant sur la plaque sternale (61) dans la région du gosier, entre cette dernière et le bréchet (60) du sternum (59), en poursuivant la partie, qui se déroule dans la région du sternum (59), de l'opération de séparation selon l'étape opératoire b);
un cinquième outil de traitement (28) destiné à détacher les parties de chair reposant sur la fourchette (64);
un sixième outil de traitement (33) destiné à sectionner les peaux qui lient en particulier les parties de filet intérieures au sternum (59);
un septième outil de traitement (40) destiné à séparer les liaisons entre la chair du filet et le sternum (59), dans la région frontale de ce dernier et la région voisine du bréchet;
un huitième outil de traitement (45) pour le détachement final de la chair du filet, du bréchet (60) du sternum (59).

4. Dispositif selon la revendication 3, caractérisé en ce que le premier outil de traitement (7) comprend une paire de parties d'outil (8) de configurations symétriques, qui comportent chacune un doigt de raclage (11), lequel est réalisé sous une forme incurvée correspondant au contour extérieur de la section transversale de la partie du corps de squelette (69), qui doit être traitée dans cette étape opératoire, et est maintenu engagé dans le trajet du corps de volaille (58) pendant le passage devant lui de cette partie.

5. Dispositif selon la revendication 3 ou 4, caractérisé en ce que le deuxième outil de traitement (12) comprend une paire de parties d'outil (13) de configurations symétriques, comportant des doigts de raclage respectifs (16), dont les parties actives s'étendent sensiblement dans un plan qui est tangent à la surface des os coracoïdes (62) et dans lequel les doigts de raclage (16) peuvent être maintenus engagés dans le trajet du corps de volaille (58), immédiatement après le passage devant eux des articulations (63) des ailes.

6. Dispositif selon l'une des revendications 3 à 5, caractérisé en ce que le troisième outil de traitement (17) comprend une paire de parties d'outil (18) de configurations symétriques, sous la forme de déflecteurs (21) qui sont chacun pourvus d'une pointe (21a) dirigée dans le sens opposé au sens de transport et qui sont disposés à proximité immédiate de la trajectoire de la fourchette (64) et sont pourvus chacun d'une butée (22) faisant saillie latéralement vers l'extérieur, pour retenir en arrière les parties de chair repoussées vers l'extérieur par les déflecteurs (21).

7. Dispositif selon la revendication 6, caractérisé en ce que chacun des déflecteurs (21) est constitué par la surface frontale, obtenue par une coupe oblique, d'une tige de guidage (20) qui s'étend sensiblement parallèlement au trajet du transporteur (1), la pointe (21a) étant réalisée dans le prolongement du flanc intérieur de chaque tige de guidage (20).

8. Dispositif selon la revendication 6 ou 7, caractérisé en ce qu'il est prévu une paire de tiges de guidage (19) disposées dans des positions symétriques, de part et d'autre du trajet du transporteur (1), en s'étendant jusque dans la région des déflecteurs (21) et des butées (22), ces tiges de guidage (19) guidant entre elles la fourchette (64) et soutenant les os coracoïdes à leurs extrémités portant les articulations des ailes.

9. Dispositif selon l'une des revendications 3 à 8, caractérisé en ce que le quatrième outil de traitement (23) comprend une paire de parties d'outil (24) de configurations symétriques, comportant des doigts de raclage respectifs (27), dont les parties actives s'étendent sensiblement dans un plan qui est tangent à la surface de la plaque sternale (61) et dans lequel les doigts de raclage (27) peuvent être engagés, dans le trajet des corps de volaille (58), juste avant l'arrivée du sternum (59), et peuvent être maintenus engagés pendant que le sternum (59) passe devant eux, les doigts de raclage (27) ménageant entre leurs extrémités frontales un passage pour le bréchet (60) du sternum (59) et étant montés élastiquement effaçables, perpendiculairement au trajet des corps de volaille (58).

10. Dispositif selon l'une des revendications 3 à 9, caractérisé en ce que l'outil de traitement (28) présente au moins une lame de raclage (31) qui peut être engagée, avant l'arrivée du corps de volaille (58), dans une position coupant le trajet de ce dernier et peut en être retirée juste avant l'arrivée du sternum (59), et qui est pourvue d'une arête de raclage (32) laquelle s'étend transversalement à la trajectoire des réceptacles (4) et à une certaine hauteur au-dessus de leur surface d'appui, qui correspond sensiblement à la trajectoire des zones de raccordement de la fourchette (64) aux os coracoïdes (62).

11. Dispositif selon l'une des revendications 3 à 10, caractérisé en ce que le sixième outil de traitement (33) comprend une paire de lames de couteau (37) qui sont disposées dans des positions symétriques en se croisant à la manière d'une cisaille, et qui peuvent être commandées de manière à se placer dans la position en cisaille avant l'arrivée du corps de volaille (58) et sont conçues de façon à pouvoir être maintenues dans cette position, dans leur zone d'action, jusqu'à peu de temps après l'entrée du bréchet (60) du sternum (59) dans leur zone d'action.

12. Dispositif selon la revendication 11, caractérisé en ce que les arêtes tranchantes (39) des lames de couteau (37) ont des configurations mutuelles formant une cisaille, les arêtes tranchantes (39) présentant une partie avancée, à partir de laquelle les arêtes tranchantes (39) s'étendent en divergeant dans le sens opposé au sens de circulation du transporteur (1) et s'étendent en convergeant dans le sens de circulation de ce dernier.

13. Dispositif selon l'une des revendications 3 à 12, caractérisé en ce que le septième outil de traitement (40) comprend au moins un élément d'arrêt (43), qui est maintenu dans une position croisant le trajet des corps de volaille (58), dans un plan situé juste au-dessus de la trajectoire du corps de squelette (69), et qui peut être retiré de cette position peu après l'arrivée du bréchet (60) du sternum (59).

14. Dispositif selon la revendication 13, caractérisé en ce que l'élément d'arrêt (43) est monté effaçable dans le sens de la hauteur.

15. Dispositif selon l'une des revendications 3 à 14, caractérisé en ce que le huitième outil de traitement (45) comprend un rouleau détacheur (46), qui est entraîné en rotation autour d'un axe (47) disposé transversalement à la trajectoire des réceptacles (4) et qui présente une gorge de passage (48) destinée à guider le bréchet (60) du sternum (59), la rotation du rouleau détacheur (46) se faisant dans le sens opposé au sens de déplacement du transporteur (1) et sa disposition étant telle, que le bréchet (60) du sternum (59) soit dirigé dans la gorge de passage (48).

16. Dispositif selon la revendication 15, caractérisé en ce que les flancs de la gorge de passage (48) du rouleau détacheur (46) sont dotés d'un pouvoir d'adhérence.

17. Dispositif selon la revendication 15 ou 16, caractérisé en ce qu'au rouleau détacheur (46), est associé un rouleau évacuateur (49) entraîné dans le même sens de rotation et présentant une nervure radiale (50) guidée dans la gorge de passage (48) du rouleau détacheur (46).

18. Dispositif selon l'une des revendications 9, 10, 11 et 13, caractérisé en ce que les parties d'outil (24, 31, 37, 43) des outils de traitement correspondants sont montées de façon à pouvoir pivoter et leur commande se fait par l'intermédiaire d'un mécanisme à came avançant en synchronisme avec l'entraînement du transporteur (1).

19. Dispositif pour la mise en oeuvre du procédé selon les revendications 1 et 2, caractérisé en ce que l'outil de traitement destiné à enlever la peau comprend au moins une paire de rouleaux (54) tournant dans des sens opposés et pourvus d'une surface périphérique adhérente, qui délimitent entre eux une fente de pincement située en position centrée au-dessus de la trajectoire du transporteur (1) et s'étendant en direction longitudinale par rapport à cette dernière, et en ce que les rouleaux (44) sont conçus de façon à pouvoir être amenés en contact avec la peau du corps de volaille (58).

20. Dispositif selon l'une des revendications 3 à 19, caractérisé en ce que les outils de traitement sont disposés le long du brin inférieur (2) du transporteur (1).
